# EUROPEAN PATENT APPLICATION

(11) **EP 1 950 721 A1**
(43) Date of publication of application: **30.07.2008**
(21) Application number: 06832757.6
(22) Date of filing: 16.11.2006
(51) Int. Cl.: G08B 27/00, H04B 1/16, H04B 7/26, H04H 1/00, H04N 7/16

(54) **PORTABLE WIRELESS COMMUNICATION TERMINAL ABD EMERGENCY BROADCAST RECEIVING SYSTEM**

(30) Priority: 17.11.2005 JP 2005332933
(71) Applicant: MATSUSHITA ELECTRIC INDUSTRIAL CO., LTD., Osaka 571-8501 (JP)
(72) Inventor: MURAMATSU, Fumihiro c/o Matsushita Electric Industrial Co., Ltd., 2-1-61, Shiromi Chuo-ku Osaka 540-6207 (JP)
(74) Representative: Grünecker, Kinkeldey, Stockmair & Schwanhäusser Anwaltssozietät
(86) International application number: PCT/JP2006/322877
(87) International publication number: WO 2007/058266

(57) **Abstract**

To enable reliable receipt of an emergency broadcast transmitted by a digital television in the event of a disaster, such as an earthquake, and diminish electric power consumed in a standby condition where an emergency broadcast is not transmitted.

In the event of a disaster, such as an earthquake, a Meteorological Agency's server 3 commands a broadcast station 8 to commence an emergency broadcast and notifies an emergency broadcast receiving information distribution server 5 of seismic information by way of the Internet 3 and a portable cellular phone network 4. The emergency broadcast receiving information distribution server 5 distributes emergency broadcast receiving information to a portable cellular phone 1 equipped with a television receiver by way of a portable cellular phone base station 6 located in an area hit by an earthquake. When received portable radio communication includes emergency broadcast receiving information, the portable cellular phone 1 equipped with a television receiver activates a television broadcast receiving circuit, to thus receive an emergency broadcast from the broadcast station 6. When the thus-received broadcast includes an emergency broadcast receiving command, all circuits having a television receiving function are activated, to thus play back an emergency broadcast.

## Description

### Technical Field

The present invention relates to a portable radio communication terminal capable of receiving a digital television broadcast as well as to an emergency broadcast transceiver system that sends and receives an emergency broadcast urgently transmitted by means of a digital television broadcast in the event of an unforeseeable disaster, such as an earthquake, a tsunami, and a typhoon etc.

### Background Art

A portable radio communication terminal capable of receiving a digital television broadcast has recentlybeen studied and developed. Of the portable radio communication terminals, some portable radio communication terminals can receive an emergency broadcast, such as news reports on incidents; natural disaster like an earthquake, a tsunami, and a typhoon; and a prompt report of the election returns (see, e.g., Patent Document 1).

In such a portable radio communication terminal, a television receiver is activated at all time so as to be able to receive broadcast data at any time. When a TMCC (Transport Management Control Code), which is emergency receiving information included in television broadcast data, is detected, a display device is activated for playing stream data into which a video signal, an audio signal and the like in the television broadcast data are encoded; and reproduction of an emergency broadcast is commenced. As a result, the display device does not need to be activated at all times, and hence electric power consumed by the portable radio communication terminal can be reduced.
Patent Document 1: JP-A-2004-2892'79

### Disclosure of the Invention

### Problem that the Invention is to Solve

However, in the related-art portable radio communication terminal, the television receiver must be kept activated at all times. Electric power consumed as a result of the television receiver being kept activated places a heavy burden on the portable radio communication terminal required to wait for a long period of time, and a further reduction in power consumption has been sought.

The present invention has been conceived in view of the circumstance and aims at providing a portable radio communication terminal and an emergency broadcast transceiver system capable of receiving a digital television emergency broadcast transmitted in theeventofadisaster, such as an earthquake, and diminishing electric power consumed in a standby condition where an emergency broadcast is not transmitted.

### Means for Solving the Problem

A portable radio communication terminal of the present invention has a first radio communication section; a second radio communication section that establishes communication less frequently than does the first radio communication section; and a startup control section that controls activation and halt of the second radio communication section. The startup control section is for starting the second radio communication section upon receipt of, from the first radio communication section, a signal for starting the second radio communication section.

By means of the configuration, there is eliminated a necessity for leaving all of the radio communication sections activated at all times. Electric power can be reduced by activating the radio communication section that is inoperative, when necessary.

The portable radio communication terminal of the present invention includes, as an embodiment of the present invention, a configuration comprising: a first radio communication section that sends and receives portable radio communication; a second radio communication section that receives a digital television broadcast; and a startup control section that activates the second radio communication section when the first radio communication section receives a signal for initiating receipt of an emergency broadcast transmitted by a digital television broadcast.

By means of the configuration, timing at which an emergency broadcast that is received with small frequency is received can be notified by using a radio communication section of the portable radio communication terminal that is normally activated. There is eliminated a necessity for leaving the radio communication section for receiving a television broadcast normally activated, so that electric power can be reduced for the radio communication section for receiving a television broadcast to wait for an emergency broadcast.

Moreover, the portable radio communication terminal includes, as one embodiment of the present invention, a configuration where the first radio communication section receives the signal from a server that reports to a broadcast station a command for transmitting an emergency broadcast.

By means of the configuration, timing at which an emergency broadcast is transmitted is notified from the server that determines whether or not to transmit an emergency broadcast. Therefore, activation of the radio communication section for receiving a televisionbroadcast canbe switched at optimum timing. Consequently, electric power required by the radio communication section for receiving a television broadcast in order to wait for receipt of an emergency broadcast can be reduced.

Moreover, the portable radio communication terminal includes, as one embodiment of the present invention, a configuration where the first radio communication section receives the signal from an external receiver capable of receiving an emergency broadcast from the broadcast station.

By means of the configuration, timing at which activation of the radio communication section for receiving a television broadcast is switched is notified by a simple configuration utilizing the external receiver. As a result, activation of the radio communication section for receiving a televisionbroadcast canbe switched at optimum timing. Consequently, the electric power consumed by the radio communication section for receiving a television broadcast in order to wait for receipt of an emergency broadcast can be reduced.

Further, the portable radio communication terminal includes, as one embodiment of the present invention, a configuration where the first radio communication section receives the signal from a base station for portable radio communication purpose.

By means of the configuration, a case where any obstruction and restrictions have arisen in a communications infrastructure is conceived as a situation where there is a high probability that an emergency broadcast will be transmitted. A command for switching activation of the radio communication section for receiving a television broadcast is reported at optimum timing from the base station. Hence, the electric power consumed by the radio communication section for receiving a television broadcast in order to wait for receipt of an emergency broadcast can be reduced.

An emergency broadcast transceiver system of the present invention comprises the portable radio communication terminal; and a server for reporting to a broadcast station a command for transmitting an emergency broadcast. The server has a server communication section capable of establishing communication with the portable radio communication terminal. The server communication section is for transmitting to the portable radio communication terminal a signal for commencing receipt of an emergency broadcast transmitted by means of a digital television broadcast when a command for transmitting an emergency broadcast is transmitted to the broadcast station.

By means of the configuration, timing at which an emergency broadcast is transmitted is notified from a server that determines whether or not to transmit an emergency broadcast. In the portable radio communication terminal, activation of the radio communication section for receiving a television broadcast can be switched at optimum timing. Consequently, the electric power consumed by the radio communication section for receiving a television broadcast in order to wait for receipt of an emergency broadcast can be reduced.

The emergency broadcast transceiver system made up of the portable radio communication terminal and an external receiver capable of receiving an emergency broadcast from a broadcast station. As an embodiment of the present invention, there is also included a configuration in which the external receiver has an external receiver communication section capable of establishing communication with the portable radio communication terminal; and in which the external receiver communication section transmits to the portable radio communication terminal a signal for commencing receipt of an emergency broadcast transmitted by means of a digital television broadcast when the emergency broadcast is received from the broadcast station.

By means of the configuration, timing at which activation of the radio communication section for receiving a television broadcast is switched can be reported to the portable radio communication terminal by a simple configuration utilizing the external receiver. As a result, the portable radio communication terminal can switch at optimum timing activation of the radio communication section for receiving a television broadcast. The electric power consumed by the radio communication section for receiving a television broadcast in order to wait for receipt of an emergency broadcast can be reduced.

The emergency broadcast transceiver system made up of the portable radio communication terminal and a base station for portable radio communication purpose. As an embodiment of the present invention, there is also included a configuration in which the base station includes a base station communication section capable of establishing communication with the portable radio communication terminal; and in which, when restrictions are imposed on portable radio communication, the base station communication section transmits to the portable radio communication terminal a signal for commencing receipt of an emergency broadcast transmitted by means of a digital television broadcast.

By means of the configuration, a case where any obstruction and restrictions have arisen in a communications infrastructure is conceived as a situation where there is a high probability that an emergency broadcast will be transmitted. The situation is notified to the portable radio communication terminal. As a result, a command for switching activation of the radio communication section for receiving a television broadcast can be notified to the portable radio communication terminal at optimum timing. Thereby, the portable radio communication terminal can reduce the electric power consumed by the radio communication section for receiving a television broadcast in order to wait for receipt of an emergency broadcast. Advantage of the Invention

According to the portable radio communication terminal and the emergency broadcast transceiver system of the present invention, there can be provided a portable radio communication terminal and an emergency broadcast transceiver system that can reliably receive an emergency broadcast transmitted by means of a digital television in the event of a disaster, such as an earthquake and that can reduce electric power consumed in a standby condition where an emergency broadcast is not transmitted.

### Brief Description of the Drawings

Fig. 1 is a view showing a general configuration of an emergency broadcast transceiver system of a first embodiment of the present invention.
Fig. 2 is a view showing a general configuration of a portable cellular phone equipped with a television receiver of the first embodiment of the present invention.
Fig. 3 is a sequence diagram showing processing procedures of an emergency broadcast transceiver system of the first embodiment of the present invention.
Fig. 4 is a flowchart showing processing procedures of the portable cellular phone equipped with a television receiver of the first embodiment of the present invention.
Fig. 5 is a view showing a general configuration of an emergency broadcast transceiver system of a second embodiment of the present invention.
Fig. 6 is a sequence diagram showing processing procedures of the emergency broadcast transceiver system of the second embodiment of the present invention.
Fig. 7 is a flowchart showing processing procedures of the portable cellular phone equipped with a television receiver of the second embodiment of the present invention.
Fig. 8 is a flowchart showing processing procedures of a portable cellular phone equipped with a television receiver of a third embodiment of the present invention.

### Descriptions of the Reference Numerals

- 1: Portable Cellular Phone Equipped With Television Receiver
- 2: Internet
- 3: Server Of Meteorological Agency
- 4: Portable Cellular Phone Network
- 5: Emergency Broadcast Receiving Information Distribution Server
- 6: Base Station
- 8: Broadcast Station
- 9: Stationary Broadcast Receiver
- 10: Domestic Server
- 102: Radio Circuit For Portable Radio Communication
- 103: Data Analysis Section
- 117: Television Broadcast Receiving Circuit
- 124: Microprocessor Unit

### Best Modes for Implementing the Invention

First through third embodiments that are the optimum modes for practicing a portable radio communication terminal and an emergency broadcast transceiver system of the present invention will be described hereunder by reference to the drawings.

### (First Embodiment)

In a portable radio communication terminal and an emergency broadcast transceiver system acting as an embodiment, there is exemplified a system in which, at the time of transmission of a digital television broadcast (hereinafter called an "emergency broadcast") from a television broadcast station in relation to urgent information based on observation data from Meteorological Agency such as information about an earthquake, emergency broadcast receiving information serving as start notification about the emergency broadcast is distributed to a portable cellular phone equipped with a television receiver owned by a user located in an area hit by the disaster; and in which the user watches the emergency broadcast by means of the portable cellular phone equipped with a television receiver in accordance with the emergency broadcast receiving information.

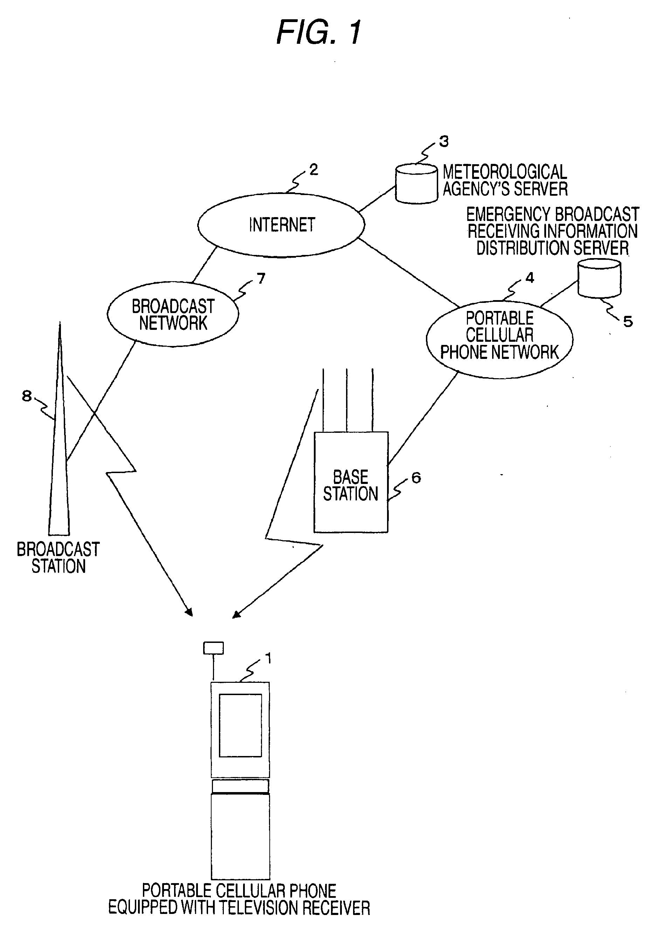

Fig. 1 is a view showing a general configuration of an emergency broadcast transceiver system of the first embodiment of the present invention. In Fig. 1, the emergency broadcast transceiver system comprises a portable telephone 1 that is equipped with a television receiver and that can receive an emergency broadcast and emergency broadcast receiving information; the Internet 2 forming a network; a Meteorological Agency's server 3 that is connected to the network 2 and that manages earthquake information; a portable telephone network 4 forming a network of portable radio communication; an emergency broadcast receiving information distribution server 5 that is connected to the portable telephone network 4 and that generates the emergency broadcast receiving information from earthquake generation information notified by the Meteorological Agency's server 3 and distributes the generated emergency broadcast receiving information; a portable telephone base station 6 that is located in an area hit by an earthquake and where emergency broadcast receiving information is distributed; a broadcast network 7 forming a network of broadcast stations; and a broadcast station 8 that is connected to the broadcast network 7 and that covers the area hit by the earthquake as a broadcast area.

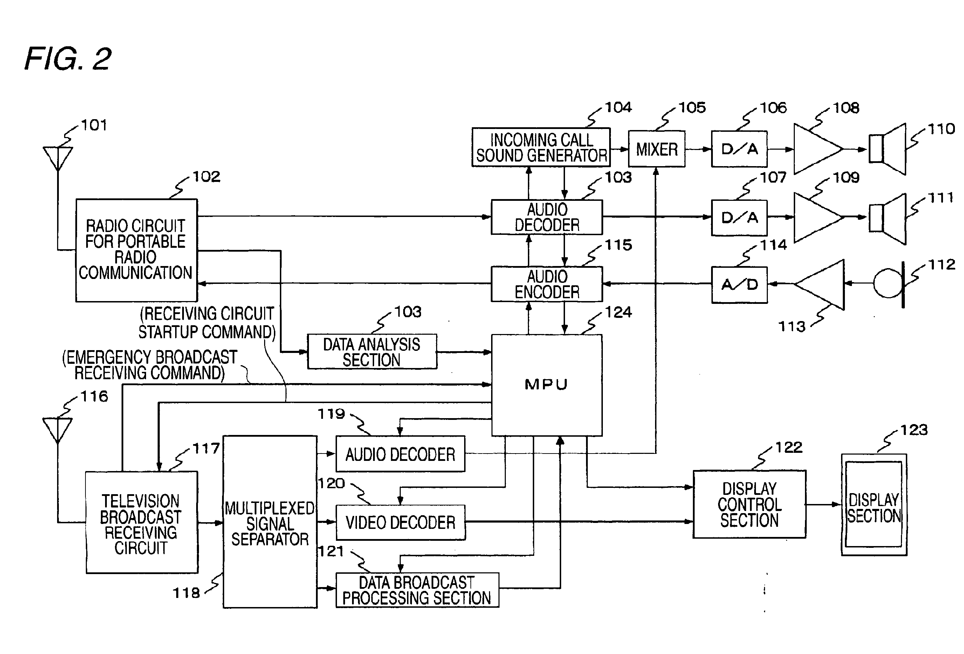

Fig. 2 is a view showing a general configuration of a portable cellular phone equipped with a television receiver of the first embodiment of the present invention.

The portable cellular phone 1 equipped with a television receiver has an antenna 101 and a radio circuit 102 for portable radio communication purpose that can perform audio communication for sending and receiving an audio signal to and from a portable cellular phone of the party at the other end by means of portable radio communication, network communication for browsing a site on the Internet 2, and mail communication for sending and receiving an electronic mail; a data analysis section 103 for extracting the previously-described emergency broadcast receiving information by analysis of a received signal; an audio decoder 103 for decoding and converting the signal, which has been received by means of portable radio communication, into an uncompressed digital audio signal; an incoming call sound generation section 104 for generating a digital incoming call sound signal used for informing a user of an arrival of a call; a mixer 105 for mixing together the digital incoming call sound signal and a television digital audio signal output from an audio decoder 118 to be described later; D-A converters 106 and 107 for converting a digital audio signal into an analogue audio signal; amplifiers 108 and 109 for amplifying the analogue audio signal; a speaker 110 for making the amplified audio signal loudly audible, to thus cause the user to receive the call; a receiver 111 that is brought into close proximity to the user, to thus cause the user to receive the call; a microphone 112 for inputting voice of the user; an amplifier 113 for amplifying the input audio signal; an A-D converter 114 for converting the amplified analogue audio signal into a digital audio signal; and an audio encoder 115 that encodes a digital audio signal.

The portable cellular phone 1 equipped with a television receiver has a television antenna 116 that receives a digital television broadcast; a television broadcast receiving circuit 117 for selecting a channel of a broadcast station designated by the user and extracting a multiplexed signal called a TS (Transport Stream) signal; a multiplexed signal separator 118 for separating an audio signal, a video signal, and a data broadcast signal from the extracted multiplexed signal; an audio decoder 119 for converting the separated television audio signal into an uncompressed television digital audio signal by means of decoding; a video decoder 120 for converting the separated television video signal into an uncompressed television digital video signal by means of decoding; a data broadcast processing section 121 for processing the separated data broadcast signal; a display control section 122 for separating a color signal and a brightness signal from the television digital video signal output from the video decoder 119 and controlling a video to be displayed on a display section 122; the display section 123 for displaying a television video; and a microprocessor unit (MPU) 124 for comprehensively controlling respective sections of the portable cellular phone 1 equipped with a television receiver.

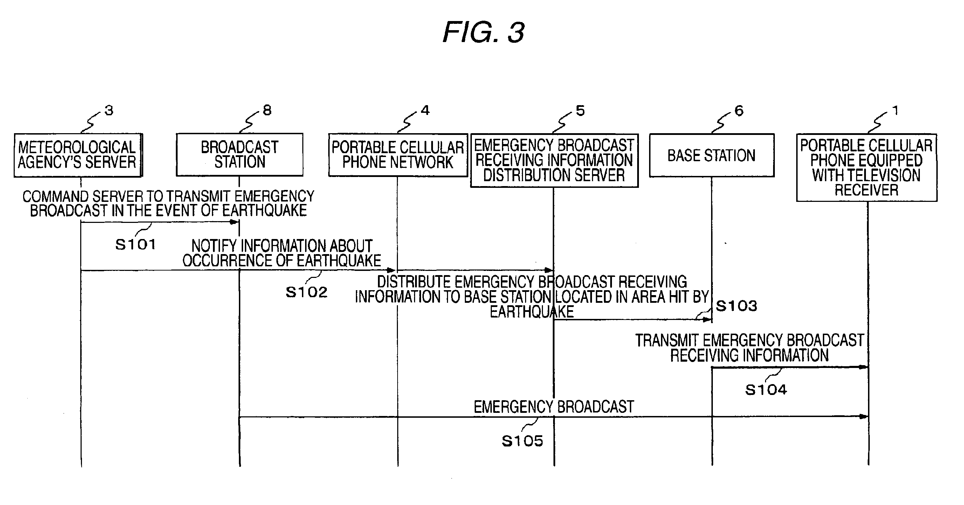

Operation of the emergency broadcast transceiver system and the portable cellular phone 1 equipped with a television receiver, which are configured as mentioned above, will now be described. Fig. 3 is a sequence diagram for explaining processing procedures of the emergency broadcast transceiving system of the present embodiment.

When an earthquake arises, the Meteorological Agency' s server 3 commands the broadcast station 8 to urgently transmit earthquake information about the seismic earthquake center, the scale of the earthquake, seismic scales achieved at respective areas, and a forecast for occurrence of a tsunami, and others by way of a network, such as the Internet 2 (step S101). Upon receipt of the command, the broadcast station 8 immediately initiates an emergency broadcast (step S105).

Concurrently, the Meteorological Agency' s server 3 sends the seismic information to the emergency broadcast receiving information distribution server 5 byway of the Internet 2 and the portable cellular phone network 4 (step S102). Upon receipt of the seismic information, the emergency broadcast receiving information distribution server 5 distributes, to the portable cellular phone base station 6 located in the area hit by the earthquake, emergency broadcast receiving information for informing transmission of the emergency broadcast from the broadcast station 8 (step S103).

The portable cellular phone base station 6 located in the area hit by the earthquake receives the emergency broadcast receiving information distributed from the emergency broadcast receiving information distribution server 5 and transmits the thus-received information to the portable cellularphone 1 equipped with a television receiver located in a service area (step S104).

The portable cellular phone 1 equipped with a television receiver receives the emergency broadcast receiving information transmitted from the portable cellular phone base station 6 and activates a circuit having a television receiving function in accordance with the thus-received information, thereby causing the circuit to receive the emergency broadcast transmitted from the broadcast station 8 to enable the user to watch the broadcast (step S105).

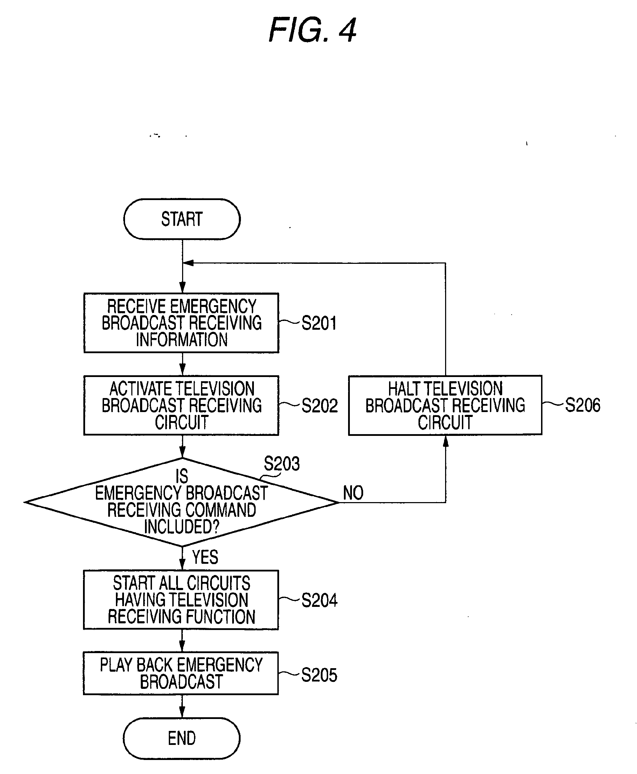

Processing operations of the portable cellular phone 1 equipped with a television receiver in the emergency broadcast transceiver system will now be described. Fig. 4 is a flowchart for describing processing operations of the portable cellular phone 1 equipped with a television receiver.

In step S201, the antenna 101 and the radio circuit 102 for portable radio communication receive the emergency broadcast receiving information transmitted from the base station 6, and the data analysis section 103 extracts the information and notifies the microprocessor unit 122 of the information. Upon receipt of the information, the microprocessor unit 122 sends a startup command signal to the television broadcast receiving circuit 116, to thus start the television broadcast receiving circuit (step S202). As a result, the portable cellular phone 1 equipped with a television receiver comes into being able to receive the emergency broadcast transmitted from the broadcast station 7 by way of the television antenna 115.

Subsequently, the microprocessor unit 122 determines whether or not the emergency broadcast received by the television broadcast receiving circuit 116 includes emergency broadcast receiving command information intended for causing the portable cellular phone 1 equipped with a television receiver to commence receipt of the emergency broadcast (step S203). Consequently, when the emergency broadcast receiving command information is determined to be included, all circuits for receiving a television broadcast, which range from the multiplexed signal separator 117 to a display section 123, are started (step S204).

The emergency broadcast received by the television antenna 115 and the television broadcast receiving circuit 116 is separated into an audio signal and a video signal by the multiplexed signal separator 117, and the signals are decoded into an uncompressed television digital audio signal and an uncompressed television digital video signal by means of the audio decoder 118 and the video decoder 119.

The decoded television digital audio signal is converted into an analogue audio signal by means of the D-A converter 107 by way of the mixer 106, and the signal is amplified by the amplifier 110, to thus activate the speaker 112. The display control section 120 separates the decoded television digital video signal into the color signal and the brightness signal, and a video of an emergency broadcast is displayed and played back on the display section 121 (step S205). The user can ascertain occurrence of an earthquake, the scale of the earthquake, a forecast about a tsunami, and others, by watching the emergency broadcast; can promptly take measures, such as an evacuation, in accordance with the degree of urgency, to thus being able to ensure safety.

In the meantime, when the emergency broadcast received by the television broadcast receiving circuit 116 is determined not to include the emergency broadcast receiving command information under a procedure pertaining to step S203, the once-started television broadcast receiving circuit 116 is stopped under the procedure pertaining to step S206 (step S206). As a result, all of the circuits having the television receiving function, including the television broadcast receiving circuit 116 and subsequent circuits, do not need to remain activatednormally in preparation for an emergency broadcast, so that power consumption can be reduced.

As mentioned above, in such an emergency broadcast transceiver system of the first embodiment of the invention, the Meteorological Agency's server 3 commands the broadcast station 8 to start transmitting an emergency broadcast to in the event of occurrence of a disaster, such as an earthquake; and notifies the emergency broadcast receiving information distribution server 5 of earthquake information by way of the Internet 3 and the portable cellular phone network 4. The emergency broadcast receiving information distribution server 5 distributes emergency broadcast receiving information to the portable cellular phone 1 equipped with a television receiver by way of the portable cellular phone base station 6 located in the area hit by the earthquake.

The portable cellular phone 1 equipped with a television receiver receives the emergency broadcast receiving information, and activates the television receiving circuit, to thus receive an emergency broadcast. When the emergency broadcast receiving command is included in the thus-received emergency broadcast, all of the circuits having a television receiving function are activated, and the emergency broadcast is played. As a result, a digital television emergencybroadcast canbe received reliably in the event of a disaster, such as an earthquake, and electric power consumed in a standby condition where an emergency broadcast is not transmitted can be reduced.

### (Second Embodiment)

In a portable radio communication terminal and an emergency broadcast transceiver system acting as an embodiment, there is exemplified a system in which, at the time of transmission of a digital television broadcast from a television broadcast station in relation to urgent information based on observation data from Meteorological Agency such as information about an earthquake, a stationary broadcast receiver received the emergency broadcast sends, in the form of a mail, an emergency broadcast receiving command to a portable cellular phone equipped with a television receiver owned by the user located in an area hit by the disaster, by way of a domestic server and a portable cellular phone network; and in which the user watches the emergency broadcast by means of the portable cellular phone equipped with a television receiver in accordance with the receiving command.

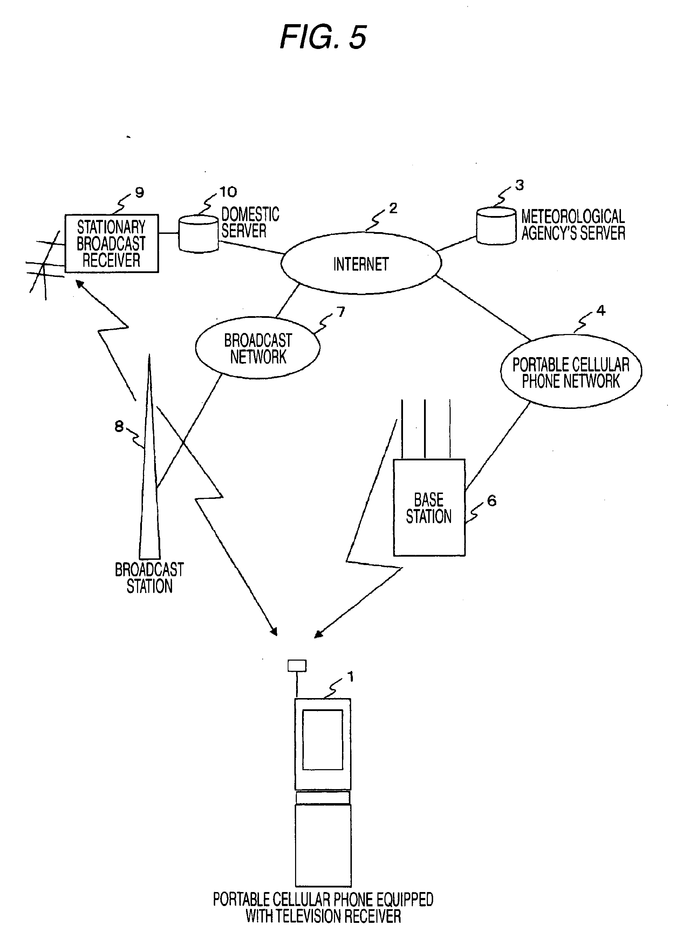

Fig. 5 is a view showing a general configuration of an emergency broadcast transceiver system of the second embodiment of the present invention. Aconfiguration of the system identical with the emergency broadcast transceiver system of the first embodiment shown in Fig. 1 is assigned the same reference numeral, and its explanation is omitted.

In Fig. 5, the emergency broadcast transceiver system has a stationary broadcast receiver 9 capable of receiving an emergency broadcast transmitted from the broadcast station 8; and a domestic server 10 that is connected to the stationary broadcast receiver 9 and that sends, in the formof a mail, an emergency broadcast receiving command to the portable cellular phone 1 equipped with a television receiver by way of the Internet 3 and the portable cellular phone network 4. The portable cellular phone 1 equipped with a television receiver of the present embodiment is identical in configuration with the portable cellular phone equipped with a television receiver of the first embodiment shown in Fig. 2, and its illustration and explanation are omitted.

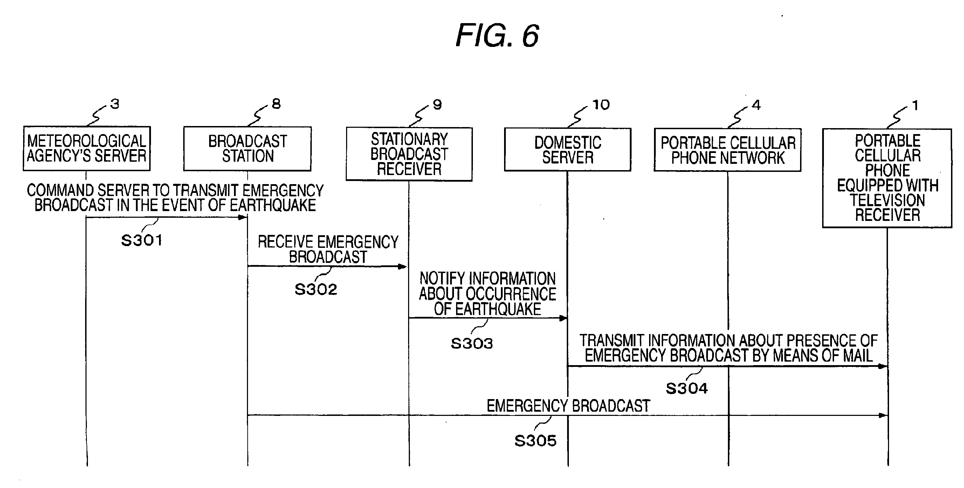

Operation of the emergency broadcast transceiver system and the portable cellular phone 1 equipped with a television receiver, which are configured as mentioned above, will now be described. Fig. 6 is a sequence diagram for explaining processing procedures of the emergency broadcast transceiving system of the present embodiment.

When an earthquake arises, the Meteorological Agency' s server 3 commands the broadcast station 8 to urgently transmit earthquake information about the seismic earthquake center, the scale of the earthquake, seismic scales achieved at respective areas, and a forecast for occurrence of a tsunami, and others by way of a network, such as the Internet 2 (step S101). Upon receipt of the command, the broadcast station 8 immediately initiates an emergency broadcast (step S105).

The stationary broadcast receiver 9 receives an emergency broadcast transmitted from the broadcast station 3 (step S302) and notifies the domestic server 10 of receipt of the emergency broadcast (step S303).

The domestic server 10 generates emergency broadcast receiving command information fromanotice of receipt of the emergency broadcast sent from the stationary broadcast receiver 9 and sends an electronic mail to the portable cellular phone 1 equipped with a television receiver by way of the Internet 3 and the portable cellular phone network 4 (step S304).

The portable cellular phone 1 equipped with a television receiver receives the emergency broadcast receiving command transmitted in the form of an electronic mail from the domestic server 10; activates a circuit having a television receiving function in accordance with the command; and receives the emergency broadcast transmitted from the broadcast station 8 (step S305) by means of the digital television, to thus enable watching of the broadcast.

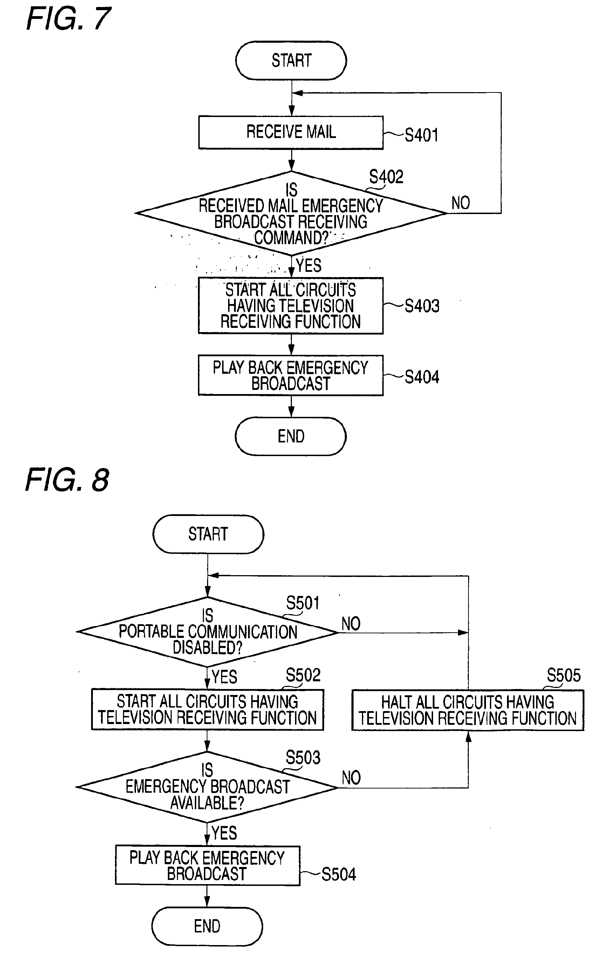

Operating procedures of the portable cellular phone 1 equipped with a television receiver of the emergency broadcast transceiver system will now be described. Fig. 7 is a flowchart for describing operating procedures of the portable cellular phone 1 equipped with a television receiver.

When the portable cellular phone 1 equipped with a television receiver receives an electronic mail from the domestic server 10 by way of the antenna 101 and the radio circuit 102 for portable radio communication (step S401), the data analysis section 103 analyzes the mail and determines whether or not the received electronic mail is an emergency broadcast receiving command (step S402).

When a result of determination shows that the received electronic mail is an emergency broadcast receiving command, the microprocessor unit 122 activates all of the circuits having a television receiving function ranging from the television broadcast receiving circuit 116 including the television antenna 115 to the indicator 123 (step S403); and plays an emergency broadcast (S404).

Procedures pertaining to step S404 are identical with those pertaining to step S205 in the flowchart shown in Fig. 4 showing operating procedures of the portable cellular-phone 1 equipped with a television receiver of the first embodiment, and their detailed explanations are omitted.

When the received electronic mail is determined not to be an emergency broadcast receiving command under procedures pertaining to step S402, processing returns to step S401 andprocessingpertaining to the following procedures is iterated.

As a result, the portable cellular phone 1 equipped with a television receiver does not need to keep activated normally in preparation for an emergency broadcast, all of the circuits having a television receiving function including the television receiving antenna 116 and subsequent circuits, and power consumption can be reduced.

As described above, in such an emergency broadcast transceiver system of the second embodiment of the present invention, a command is received from the Meteorological Agency' s server 3 in the event of a disaster such as an earthquake, the stationary broadcast receiver 9 receives an emergency broadcast started by the broadcast station 8 and notifies the domestic server 10 of the emergency broadcast. The domestic server 10 generates emergency broadcast receiving command information from the emergency broadcast and transmits an electronic mail to the portable cellular phone 1 equipped with a television receiver by way of the Internet 3 and the portable cellular phone network 4.

The portable cellular phone 1 equipped with a television receiver receives the electronic mail and determines whether or not the mail is an emergency broadcast receiving command. When the mail is the emergency broadcast receiving command, all of the circuits having a television receiving function are started, to thus receive and play the emergency broadcast. Thus, the emergency broadcast transmitted in the event of a disaster, such as an earthquake, can be received without fail, and power consumed in a standby condition where an emergency broadcast is not transmitted can be reduced.

### (Third Embodiment)

In a portable radio communication terminal and an emergency broadcast transceiver system acting as an embodiment, there is exemplified a system in which, at the time of transmission of a digital television broadcast from a television broadcast station in relation to urgent information based on observation data from Meteorological Agency such as information about an earthquake, an emergency broadcast is received when a portable cellular phone equipped with a television receiver owned by the user is outside a service area of portable radio communication or a restriction is imposed on origination of a call because of a disaster or the like.

A configuration and operating procedures of the emergency broadcast transceiver system of the present embodiment are identical with the configuration and operating procedures of the emergency broadcast transceiver system of the first embodiment shown in Figs. 1 and 3, and their illustrations and explanations are omitted. A configuration of a portable cellular phone equipped with a television receiver is identical with the configuration of the portable cellular phone equipped with a television receiver of the first embodiment shown in Fig. 2, and its illustration and explanation are omitted.

Operating procedures of the emergency broadcast transceiver system and those of the portable cellular phone 1 equipped with a television receiver of the present embodiment will now be described. Fig. 8 is a flowchart for describing the operating procedures of the portable cellular phone 1 equipped with a television receiver.

In step S501, the microprocessor unit 122 of the portable cellular phone 1 equipped with a television receiver monitors whether or not portable radio communication performed by way of the antenna 101 and the radio circuit 102 for portable radio communication purpose is disabled because the cellular phone is outside a service area of portable radio communication or by a restriction imposed on origination of a call because of a disaster.

When portable radio communication is determined to be disabled, all of the circuits, which have a television receiving function and which range from the television broadcast receiving circuit 116, including the television antenna 115, to the indication section 123, are activated under control of the microprocessor unit 122 (step S502), to thus receive a television broadcast and determine whether or not an emergency broadcast is available (step S503). When the received television broadcast is determined to be an emergency broadcast, the emergency broadcast is received and played in step S504. Procedures pertaining to step S504 are identical with step S205 in the flowchart shown in Fig. 4 that shows the operating procedures of the portable cellular phone 1 equipped with a television receiver of the first embodiment, and their detailed explanations are omitted.

In the meantime, when the received television broadcast is determined not to be an emergency broadcast under procedures pertaining to step S505, all of the circuits having a television receiving function once activated under procedures pertaining to step S503 are deactivated. Subsequently, processing returns to procedures pertaining to step S501, thereby monitoring whether or not portable radio communication is disabled.

By means of these procedures, the portable cellular phone 1 equipped with a television receiver does not need to keep all of the circuits having a television receiving function activated normally in preparation for an emergency broadcast, and power consumption can be diminished.

As described above, in the event of a disaster such as an earthquake, such an emergency broadcast transceiver system of the second embodiment of the present invention receives a command from the Meteorological Agency's server 3, and the broadcast station 8 commences transmission of an emergency broadcast.

When portable radio communication is disabled because the cellular phone 1 equipped with a television receiver is outside a service area of portable radio communication or by a restriction imposed on origination of a call because of a disaster, all of the circuits having a television receiving function are activated, to thus receive a television broadcast transmitted from the broadcast station 6. When the television broadcast is an emergency broadcast, the broadcast is played. On the contrary, when the received television broadcast is not the emergency broadcast, the once-activated all of the circuits having a television receiving function are deactivated. As a result, an emergency broadcast can be received reliably in the event of a disaster, such as an earthquake, and electric power consumed in a standby condition where an emergency broadcast is not transmitted can be diminished.

Although the present invention has been described in detail by reference to the specific embodiments, it is manifest to those skilled in the art that the present invention is susceptible to various alterations and modifications without departing from the spirit and scope of the present invention.

The present invention is based on Japanese Patent Application (No. JP 2005-332933) filed on November 17, 2005 in Japan, contents of which are incorporated herein by reference.

### Industrial Applicability

The present invention yields an advantage of the ability to provide a portable radio communication terminal and an emergency broadcast transceiver system that enable reliable receipt of an emergency broadcast transmitted by means of a digital television in the event of a disaster, such as an earthquake, and that can diminish electric power consumed in a standby condition where an emergency broadcast is not transmitted; and is very useful for a portable cellular phone equipped with a television receiver, or the like.

## Claims

1. A portable radio communication terminal comprising:
a first radio communication section;
a second radio communication section that establishes communication less frequently than the first radio communication section; and
a startup control section that controls activation and halt of the second radio communication section, wherein, upon receipt of a signal for starting the second radio communication section from the first radio communication section, the startup control section starts the second radio communication section.

2. A portable radio communication terminal comprising:
a first radio communication section that sends and receives portable radio communication;
a second radio communication section that receives a digital television broadcast; and
a startup control section that, when the first radio communication section receives a signal for initiating receipt of an emergency broadcast transmitted by a digital television broadcast, activates the second radio communication section.

3. The portable radio communication terminal according to claim 1 or 2, wherein the first radio communication section receives the signal from a server that notifies a broadcast station of a command for transmitting an emergency broadcast.

4. The portable radio communication terminal according to claim 2, wherein the first radio communication section receives the signal from an external receiver capable of receiving an emergency broadcast from the broadcast station.

5. The portable radio communication terminal according to claim 2, wherein the first radio communication section receives the signal from a base station for portable radio communication purpose.

6. An emergency broadcast transceiver system comprising:
the portable radio communication terminal defined in claim 3; and
a server for reporting to a broadcast station a command for transmitting an emergency broadcast, wherein the server has a server communication section capable of establishing communication with the portable radio communication terminal, and, when transmitting to the broadcast station a command for transmission of an emergency broadcast, the server communication section transmits to the portable radio communication terminal a signal for commencing receipt of an emergency broadcast transmitted by a digital television broadcast.

7. An emergency broadcast transceiver system comprising:
the portable radio communication terminal defined in claim 4; and
an external receiver capable of receiving an emergency broadcast from a broadcast station, wherein the external receiver has an external receiver communication section capable of establishing communication with the portable radio communication terminal; and
when received the emergency broadcast from the broadcast station, the external receiver communication section transmits to the portable radio communication terminal a signal for commencing receipt of an emergency broadcast transmitted by a digital television broadcast.

8. An emergency broadcast transceiver system comprising:
the portable radio communication terminal defined in claim 5; and
a base station for portable radio communication purpose, wherein the base station includes abase station communication section capable of establishing communication with the portable radio communication terminal; and, when restrictions are imposed on portable radio communication, the base station communication section transmits to the portable radio communication terminal a signal for commencing receipt of an emergency broadcast transmitted by a digital television broadcast.
